Europäisches Patentamt

**European Patent Office**

Office européen des brevets

(11) Numéro de publication: **0 238 369**
**B1**

(12) **FASCICULE DE BREVET EUROPEEN**

(45) Date de publication du fascicule du brevet:
**11.10.89**

(51) Int. Cl.⁴: **F02K 9/80**

(21) Numéro de dépôt: **87400239.7**

(22) Date de dépôt: **03.02.87**

(54) **Dispositif pour faire varier la poussée d'un propulseur à propergol solide.**

(30) Priorité: **18.02.86 FR 8602148**

(43) Date de publication de la demande:
**23.09.87 Bulletin 87/39**

(45) Mention de la délivrance du brevet:
**11.10.89 Bulletin 89/41**

(84) Etats contractants désignés:
**DE GB IT**

(56) Documents cités:
**CH-A- 259 489**
**FR-A- 1 128 730**
**FR-A- 1 268 781**
**FR-A- 2 085 297**
**US-A- 2 552 497**
**US-A- 3 011 309**
**US-A- 3 608 312**
**US-A- 3 760 589**
**US-A- 3 914 935**

(73) Titulaire: **AEROSPATIALE Société Nationale
Industrielle, 37, Boulevard de Montmorency,
F-75781 Paris Cédex 16(FR)**

(72) Inventeur: **Le Corre, Alain Marie, 8 rue de Villères,
F-92700 Colombres(FR)**
Inventeur: **Calabro, Max Jean-Pierre, 15 rue des
Chèvremonts, F-92000 Nanterre(FR)**
Inventeur: **Vigier, Gilles Bernard, 16 chemin des Menues
Terres Lainville, F-78440 Aubergenville(FR)**
Inventeur: **Comtesse, Patrick, 12 allée des Marronniers,
F-78480 Verneuil s/ Seine(FR)**
Inventeur: **Beau, Jean François, 1 allée Jacques Callot,
F-95310 St Ouen l'Aumone(FR)**

(74) Mandataire: **Barnay, André François, Cabinet
Barnay 80 rue Saint-Lazare, F-75009 Paris(FR)**

ACTORUM AG

## Description

La présente invention est relative au réglage de la poussée d'un propulseur et elle concerne plus particulièrement un dispositif pour faire varier la poussée d'un propulseur à propergol solide.

La variation du module du vecteur poussée d'un propulseur peut être obtenue soit en faisant varier le débit des gaz, soit en faisant dévier une partie des gaz axialement en sens opposé à la poussée principale ou bien radialement de façon symétrique.

La variation du débit peut être effectuée soit directement en commandant la quantité de propergol à l'entrée de la chambre, soit indirectement par réglage de la section de sortie de la chambre.

Dans le cas d'un propergol liquide, la commande du débit à l'entrée de la chambre ne pose pas de difficultés. Par contre, dans le cas d'un propergol solide, pour lequel la chambre de combustion assure en même temps la fonction de stockage, seule est utilisable la solution du réglage de la section de sortie, au niveau du col de la tuyère.

Lorsqu'on utilise un propergol dont la vitesse de combustion est très sensible à la pression, toute variation de la section du col de la tuyère produit une variation de la pression de combustion et par conséquent une variation du débit.

On connaît déjà différents dispositifs de réglage de la section d'une tuyère. Parmi la technique connue, on peut citer notamment les brevets US 3.069.846 et US 3.192.710 qui décrivent des dispositifs comportant des pointeaux disposés en amont du col de la tuyère.

Le brevet US 3.069.846 a pour objet un dispositif de réglage de poussée comportant un obturateur formé d'une soupape soulevante dont la tête conique s'étend dans le col de la tuyère et qui est actionnée par un électro-aimant.

Ce dispositif impose un trajet coudé pour la sortie des gaz. Il est par conséquent encombrant et inapplicable dans de nombreux cas.

Le brevet US 3 192 710 décrit un dispositif dans lequel une came annulaire montée autour de la tuyère est actionnée par des moteurs pour déplacer la tuyère elle-même axialement par rapport à un pointeau fixe.

Ce dispositif est également encombrant du fait de la position obligée de ses constituants autour du convergent-divergent, et cet encombrement en limite également les applications.

Les brevets US 3 726 480 et US 3 943 708 décrivent des dispositifs dans lesquels un organe mobile, ou pointeau, est disposé dans la tuyère, en aval par rapport à l'écoulement des gaz, et est déplacé axialement dans le col de celle-ci au moyen d'un système de vérins.

Enfin, CH-A 259 489 décrit un ensemble pour faire varier la poussée d'un propulseur à combustible solide, comportant une soupape montée coulissante dans un carter fixé dans la tuyère et dont le siège est constitué par le col de la tuyère.

Non seulement le mécanisme de ces dispositifs est relativement compliqué, mais en outre il est entièrement baigné par les gaz chauds, ce qui pour le moins nuit au fonctionnement du dispositif dont l'isolation thermique est extrêmement difficile.

Le but de l'invention est de remédier à ces inconvénients en réalisant un dispositif pour faire varier la poussée d'un propulseur à propergol solide ayant un mécanisme simple à peu près insensible à la chaleur des gaz de propulsion et d'un encombrement extrêmement réduit.

L'invention a pour objet à cet effet un dispositif pour faire varier la poussée d'un propulseur à propergol solide dont la vitesse de combustion est sensible à la pression, en réglant la section de passage de la tuyère, du type comportant un pointeau, réglable axialement dans le col de sortie de la chambre de combustion et disposé en aval de ce col, et comportant un ensemble monté mobile de façon télescopique à la sortie de la chambre de combustion, caractérisé en ce que ledit ensemble est monté dans un corps de vérin et exposé à la pression des gaz de combustion, et constitue à la fois un obturateur-pointeau pour la chambre de combustion et un piston pour ledit vérin, des moyens réglables étant prévus pour commander le déplacement dudit ensemble sous l'action des gaz de combustion, et ledit ensemble délimitant une seconde chambre, de tranquillisation des gaz, mobile par rapport à la chambre de combustion.

Suivant un mode de réalisation, l'ensemble mobile comprend un obturateur constituant un pointeau et un bouclier thermique entourant ledit obturateur et délimitant une chambre annulaire avec ledit corps.

De préférence, ledit obturateur est creux et comporte une première extrémité amont, formant un pointeau, engagée dans le col de sortie de la chambre de combustion, un corps délimitant ladite seconde chambre, qui est adaptée pour communiquer avec la chambre de combustion, et un divergent.

D'une façon avantageuse, le bouclier thermique entoure au moins partiellement le corps de l'obturateur.

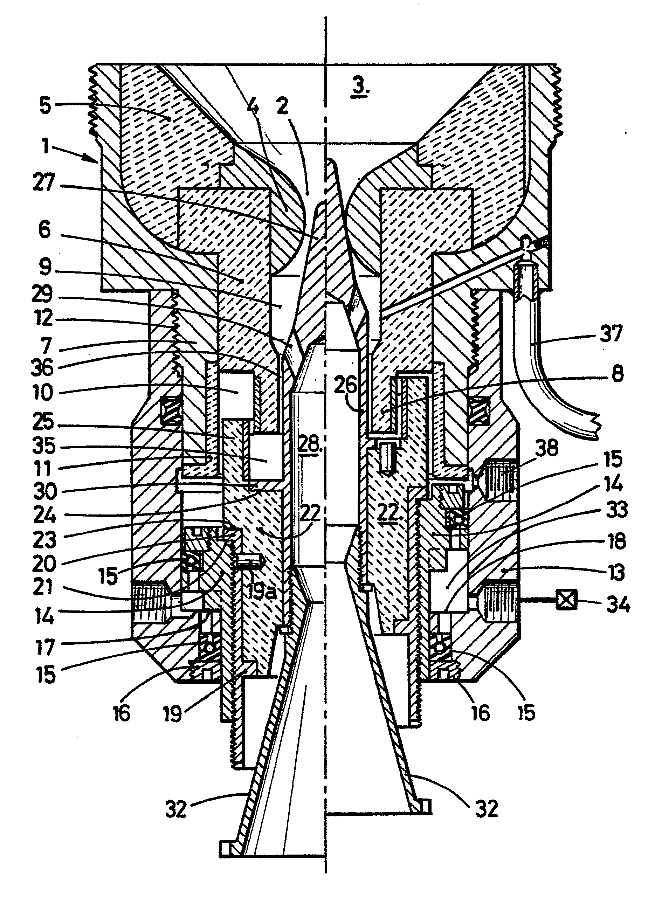

La description qui va suivre, en regard du dessin annexé à titre d'exemple non limitatif permettra de bien comprendre comment l'invention peut être mise en pratique.

La figure unique est une vue en coupe longitudinale du dispositif suivant l'invention, monté sur l'extrémité de sortie d'une chambre de combustion d'un propergol solide, la moitié de droite montrant l'ensemble mobile en position rétractée dans laquelle le pointeau obture le col de sortie de la chambre de combustion, tandis que la moitié de gauche le montre en position d'extension complète dans laquelle la seconde chambre, formée dans l'obturateur, communique avec la chambre de combustion.

En se référant au dessin la référence 1 désigne dans son ensemble l'extrémité de sortie d'une chambre de combustion d'un propergol solide dont la vitesse de combustion est sensible à la pression de gaz.

Comme connu en soi, le col de sortie 2 de la chambre de combustion 3 est délimité par des garnitures en matériau composite résistant aux hautes températures, par exemple en carbone-carbone, céramique, carbone phénolique, composite métallique ou autres, 4, 5 et 6.

Le corps de la chambre de combustion comporte un prolongement cylindrique 7 qui s'étend un peu au-delà du col 2 et à l'intérieur duquel s'étend partiellement la garniture 6 formant un blindage thermique, cette garniture 6 délimitant avec la garniture 4 formant le col 2, en aval de celui-ci, un espace 9 et comportant une jupe 8 dirigée vers l'aval, parallèle à la paroi du prolongement 7 et délimitant avec celle-ci une chambre annulaire 10.

De préférence, au niveau de la chambre annulaire 10, la paroi du prolongement 7 est également revêtue d'une garniture de protection thermique 11.

Le prolongement 7 est fileté extérieurement comme représenté en 12 pour recevoir l'ensemble suivant l'invention pour faire varier la poussée du propulseur.

Cet ensemble comprend un corps 13 fileté intérieurement et vissé sur le prolongement 7.

Dans le corps 13 est monté coulissant un piston annulaire 14 dont l'étanchéité avec le corps 13 est assurée par des garnitures 15 dont l'une, au voisinage de l'extrémité aval du corps 13, est maintenue dans celui-ci par une bague 16.

Le piston annulaire 14 comporte, à peu près à la moitié de sa longueur, un épaulement 17 en saillie radiale vers l'extérieur, tandis que le corps 13 comporte à son extrémité aval un épaulement radial interne complémentaire 18.

Le piston annulaire 14 entoure un organe de liaison 19 constitué par un manchon cylindrique ayant un rebord radial externe 20 à son extrémité amont, en contact avec un épaulement correspondant 21 du piston 14.

Le manchon 19 assure la liaison entre le piston 14 et un bouclier thermique cylindrique 22 par exemple en carbone-carbone, céramique-céramique ou autre, auquel il est fixé par des vis 19a.

Le bouclier thermique 22 présente un épaulement radial externe 23 coopérant avec l'épaulement radial externe 20 du manchon 19. Il comporte en outre un alésage interne dans lequel un épaulement 24 délimite deux parties de diamètres différents dont celle ayant le plus grand constitue une couronne 25 ayant une épaisseur à peu près égale à la largeur de la chambre 10 entre la jupe 8 et le prolongement 7.

Dans la seconde partie de l'alésage du bouclier thermique 22, ayant le diamètre le plus petit, est disposé axialement un organe obturateur creux ayant un corps cylindrique 26 comportant une extrémité amont, ou nez, 27 de forme à peu près conique. Le nez 27 est adapté pour pénétrer dans le col 2 et se déplacer dans celui-ci entre une position d'obturation complète (moitié de droite de la figure) et une infinité de positions déterminant des ouvertures annulaires de section variable de ce col (moitié de gauche de la figure).

Le nez 27 et le corps 26 délimitent une chambre interne 28 adaptée pour communiquer avec l'espace 9 à travers des évents 29 prévus à la base du nez conique 27.

Le corps 26 de l'obturateur comporte dans sa partie médiane une collerette radiale externe 30 complémentaire de l'épaulement 24 du bouclier thermique 22, sur lequel elle est fixée.

A l'extrémité du corps 26 opposée au nez 27, ou extrémité aval, est fixé un divergent 32 délimitant un col à la sortie de la chambre 28.

Enfin, le diamètre interne de la jupe 8 de la garniture 6, dans laquelle s'étend partiellement le corps de l'obturateur 26 en amont de la collerette 30, est un peu supérieur au diamètre externe de l'obturateur, laissant ainsi subsister un passage annulaire 36 reliant l'espace 9 à la collerette 30.

On comprend que l'agencement est tel que l'obturateur 26, 27, le bouclier thermique 22 dont il est solidaire, le divergent 32 et l'organe de liaison 19 peuvent coulisser ensemble dans le corps 13, entre la position représentée à la moitié droite du dessin, dans laquelle le nez 27 obture complètement le col 2 et dans laquelle le piston annulaire 14 peut être repoussé vers le haut avec son épaulement 17 espacé de l'épaulement 18 du corps 13, délimitant ainsi une chambre annulaire 33, sous la pression d'un fluide hydraulique introduit par un dispositif réglable 34 relié à une bâche par l'intermédiaire d'un robinet (non représenté) et une position d'ouverture totale ou partielle représentée sur la partie gauche du dessin.

Lorsque, dans cette position de fermeture, le propergol est mis à feu, la pression des gaz dans la chambre de combustion 3 tend à faire reculer l'obturateur 26 pour dégager le col 2, en entraînant avec lui le bouclier thermique 22, la pièce de liaison 19 et le piston 14.

Ce mouvement de recul se trouve bloqué par le fluide hydraulique enfermé dans la chambre annulaire 33 par l'épaulement 17 du piston 14, formant ainsi un vérin dont l'échappement est commandé.

Aussitôt que ce fluide commence à s'échapper, l'obturateur 26 continue de reculer et les gaz peuvent passer d'une part à travers les évents 29 dans la chambre 28 et d'autre part à travers le passage annulaire 36 pour parvenir sur la collerette 30.

Celle-ci ayant légèrement reculé délimite avec l'extrémité aval de la jupe 8 une chambre annulaire 35 de volume variable, et la pression des gaz dans cette chambre s'exerce sur la collerette 30, formant piston, tendant ainsi à faire reculer l'ensemble obturateur-bouclier thermiquepièce de liaison-piston.

Au fur et à mesure qu'on laisse le fluide hydraulique s'échapper de la chambre 33 du vérin, le volume de la chambre 35 augmente, l'obturature 26 recule, le nez 27 dégage de plus en plus le col 2 et le volume de la chambre 33 du vérin diminue, éventuellement jusqu'à zéro.

On comprend ainsi que le pilotage du système se résume à asservir le débit de sortie du fluide hydraulique par l'ajutage réglable 34, à la pression régnant dans la chambre de combustion, en fonction de la loi de poussée désirée.

Les domaines d'application de l'invention se déterminent autour des problèmes liés à la propulsion des fusées. L'invention s'applique donc à des fusées ayant besoin pour répondre aux exigences de mission :

- d'un moteur à poussée variable dont l'évolution dans le temps est contrôlée par une boucle d'asservissement, cette évolution de la poussée n'étant donc pas prédéterminée;

- d'un moteur à poussée variable de très faible encombrement en diamètre et de faible masse, ce qui implique entre autre que l'activation du mécanisme d'obturation n'ait pas besoin d'une source d'énergie particulière qui grève le devis de masse.

Cependant, si le mouvement de l'ensemble mobile se limite à un mouvement d'ouverture, le domaine de loi de poussée réalisable dépend du dessin du bloc de propergol.

Par exemple, si le bloc de propergol est un bloc tubulaire à faces inhibées, donnant à section de sortie constante une loi de poussée fortement croissante (loi 1) à l'intérieur d'un domaine limité par la masse de propergol embarquée, on peut réaliser soit :

- des lois constamment croissantes (1, 1'),
- des lois à paliers (2, 2', 2") suivis ou non de phases de croissance,
- des lois plus complexes alternant des phases de croissance et de décroissance.

L'originalité de l'invention réside dans le concept du système qui a été mis au point pour obtenir une poussée variable avec un propulseur à propergol solide.

Ce système est basé sur :

- Des moyens d'actionnement de l'obturateur qui ne nécessitent pas une source d'énergie particulière, l'énergie nécessaire à l'actionnement étant fournie par les gaz propulsifs.
- La pression des gaz propulsifs qui s'exerce sur l'obturateur formant pointeau permet de comprimer un vérin hydraulique dont l'ensemble mobile (comprenant la deuxième chambre) constitue le piston; il suffit alors de contrôler la fuite du vérin pour contrôler l'ouverture du système. Si l'on prévoit un système de génération hydraulique dans le vérin, il devient possible de contrôler aussi bien la fermeture que l'ouverture; la poussée devient alors réglable dans une large gamme.
- Le pointeau que constitue l'obturateur est placé en aval du col et solidaire de l'ensemble mobile avec la seconde chambre.
- L'intégration d'une seconde chambre solidaire du pointeau aval permet de réduire les efforts exercés sur le pointeau et donc d'alléger la structure mécanique qui le supporte.
- Grâce à la seconde chambre et au second col de section fixe, l'écoulement aérodynamique dans la tuyère est de révolution; sa ligne moyenne est dans l'axe de la tuyère. La poussée est proportionnelle à la pression dans la seconde chambre. Cette conception apporte donc une simplification pour la boucle d'asservissement puisque la poussée peut être asservie à un seul paramètre : la pression dans la deuxième chambre.
- Le mécanisme hydraulique qui commande l'actionnement de l'obturateur ne baigne pas entièrement dans les gaz chauds, ce qui permet de résoudre les problèmes d'isolation thermique plus simplement à moindre masse et à moindre encombrement.

- Les moyens d'actionnement de l'obturateur étant en grande partie extérieurs à l'écoulement peuvent être implantés dans la zone col-divergent qui offre naturellement un volume disponible, ce qui permet de ne pas excéder le diamètre du cylindre de la première chambre.
- Ce dispositif est conçu pour fonctionner avec des gaz chauds.
- L'utilisation de deux chambres de détente assure d'une part un jet de sortie de tuyère plus homogène, les turbulences étant atténuées dans la chambre 28, et permet d'autre part de limiter la poussée sur le vérin (l'effort de poussée s'opposant à l'effort de pression).

Les références 37 et 38 désignent des moyens de sortie adaptés pour recevoir des capteurs de température et de pression.

**Revendications**

1. Dispositif pour faire varier la poussée d'un propulseur à propergol solide dont la vitesse de combustion est sensible à la pression, en réglant la section de passage de la tuyère, du type comportant un pointeau, réglable axialement dans le col de sortie de la chambre de combustion et disposé en aval de ce col, et comportant un ensemble monté mobile de façon télescopique à la sortie de la chambre de combustion, caractérisé en ce que ledit ensemble est monté dans un corps de vérin (13) et exposé à la pression des gaz de combustion, et constitue à la fois un obturateur-pointeau (27) pour la chambre de combustion et un piston (14) pour ledit vérin, des moyens réglables (34) étant prévus pour commander le déplacement dudit ensemble sous l'action des gaz de combustion, et ledit ensemble délimitant une seconde chambre (28), de tranquillisation des gaz, mobile par rapport à la chambre de combustion (3).

2. Dispositif suivant la revendication 1, caractérisé en ce que ledit ensemble mobile comprend un obturateur (26) constituant un pointeau (27), un bouclier thermique (22) entourant ledit obturateur (26), un pièce de liaison (19) et un piston annulaire (14) qui délimite avec le corps (13) une chambre de vérin (33) pourvue d'un dispositif de sortie réglable (34).

3. Dispositif suivant la revendication 2, caractérisé en ce que ledit obturateur (26) est creux et comporte une première extrémité amont, formant un pointeau (27), engagée dans le col de sortie (2) de la chambre de combustion (3), un corps (26, 27) délimitant ladite seconde chambre (28), qui est adaptée pour communiquer avec la chambre de combustion (3), et un divergent (32).

4. Dispositif suivant la revendication 2, caractérisé en ce que le bouclier thermique (22) entoure partiellement le corps de l'obturateur (26).

5. Dispositif suivant la revendication 4, caractérisé en ce qu'une collerette périphérique radiale externe (30) est prévue sur le corps de l'obturateur (26) en liaison d'entraînement avec ledit bouclier thermique (22).

6. Dispositif suivant la revendication 5, caractérisé en ce que l'ensemble mobile est adapté pour délimiter avec le corps (13) du vérin une première chambre annulaire (35) à son extrémité amont pour les gaz de combustion et, à son extrémité aval, avec le corps (13) une seconde chambre annulaire (33) de vérin pour un fluide hydraulique.

7. Dispositif suivant la revendication 6, caractérisé en ce que ladite première chambre anulaire (35) communique avec la sortie de la chambre de combustion (3) par un passage annulaire (36) ménagé entre le corps de l'obturateur (26) et une garniture de protection thermique (6) d'un prolongement (7) de la chambre de combustion, qui entoure partiellement l'obturateur.

8. Dispositif suivant la revendication 6, caractérisé en ce que ladite seconde chambre annulaire (33) communique avec l'extérieur par l'intermédiaire desdits moyens (34) de freinage de déplacement dudit ensemble mobile limitant l'échappement du fluide du vérin.

9. Dispositif selon les revendications 6 et 8, caractérisé en ce que ladite seconde chambre annulaire (33) communique avec un dispositif d'asservissement permettant ainsi de régler la poussée à la valeur requise.

10. Dispositif suivant la revendication 3, caractérisé en ce que le divergent (32) est constitué par une pièce rapportée sur le corps (1) de l'obturateur (26) à l'extrémité aval de la seconde chambre (28).


## Claims

1. Thrust regulating device for a solid fuel propulsion unit, the speed of combustion of which is pressure sensitive, by adjusting the cross-section of a pipe of the type comprising a needle axially adjustable in the outlet neck of the combustion chamber and disposed downstream of the neck, and comprising an assembly freely mounted in a telescopic manner at the combustion chamber outlet, characterised in that the assembly is mounted within a valve body (13) and is subject to the pressure of the combustion gases and comprises both a regulator needle (27) for the combustion chamber and a piston (14) for such valve, adjustable means (34) being provided for controlling displacement of the assembly under the action of the combustion gases and the assembly defining a second chamber (28) for tranquilisation of the gases which is movable relative to the combustion chamber (3).

2. Device according to claim 1, characterised in that the movable assembly comprises a regulator member (26) forming a needle (27), a thermal shield (22) surrounding the regulator member (26), a connecting member (19) and an annular piston (14) which, with the body (13), defines a valve chamber (33) provided with an adjustable outlet device (34).

3. Device according to claim 2, characterised in that the regulator member (26) is hollow and comprises a first upstream end forming a needle (27) engaged in the outlet neck (2) of the combustion chamber (3), a member (26, 27) defining the second chamber (28), which is arranged to communicate with the combustion chamber (3), and a divergent portion (32).

4. Device according to claim 2, characterised in that the thermal shield (22) partially surrounds the body of the regulator member (26).

5. Device according to claim 4, characterised in that an external radial peripheral collar (30) is provided on the regulator member (26) in conjunction with the thermal shield (22).

6. Device according to claim 5, characterised in that the movable assembly is arranged to define, with the valve body (13), a first annular chamber (35) at its upstream end, for the combustion gases, and, at its downstream end with the body (13), a second annular valve chamber (33) for a hydraulic fluid.

7. Device according to claim 6, characterised in that the first annular chamber (35) communicates with the outlet of the combustion chamber (3) through an annular passage (36) provided between the regulator member (26) and a thermal protection member (6) of an extension (7) of the combustion chamber, which partially surrounds the regulator member.

8. Device according to claim 6, characterised in that the second annular chamber (33) communicates with the exterior through means (34) for restraining displacement of the movable assembly limiting the escape of fluid via the valve.

9. Device according to claims 6 and 8, characterised in that the second annular chamber (33) communicates with a slave device, thus permitting adjustment of the pressure to the desired value.

10. Device according to claim 3, characterised in that the divergent portion (32) comprises a member connected to the body (1) of the regulator member (26) at the downstream end of the second chamber (28).


## Patentansprüche

1. Vorrichtung zum Steuern der Schubkraft eines Festtreibstoff-Strahltriebwerks, bei welchem die Verbrennungsgeschwindigkeit druckabhängig ist, durch Regelung des Durchtrittsquerschnitts der Düse, mit einer Düsennadel, die in dem Hals am Ausgang der Verbrennungskammer axial verstellbar und niederdruckseitig bezüglich des Halses angeordnet ist, und mit einer Einheit, die teleskopartig verschiebbar am Ausgang der Verbrennungskammer angebracht ist, dadurch gekennzeichnet, daß die Einheit in einem Zylinderkörper (13) angeordnet und dem Druck der Verbrennungsgase ausgesetzt ist und zugleich eine Düsennadel-Verschlußvorrichtung (27) für die Verbrennungskammer sowie einen Kolben (14) für den genannten Zylinder bildet, wobei Steuermittel (34) vorgesehen sind, um die Verschiebung der Einheit unter der Wirkung der Verbrennungsgase zu steuern und wobei die Einheit eine weitere Kammer (28) zur Beruhigung der Gase begrenzt, die bezüglich der Verbrennungskammer (3) verschiebbar ist.

2. Vorrichtung nach Anspruch 1, dadurch gekennzeichnet, daß die bewegliche Einheit eine Verschlußvorrichtung (26) umfaßt, die eine Düsennadel (27), eine die Verschlußvorrichtung (26) umgreifende thermische Abschirmung (22), ein Verbindungsteil (19) und einen Ringkolben (14) aufweist, der mit dem Körper (13) einen Zylinderraum (33) begrenzt, der mit einer steuerbaren Auslaßvorrichtung (34) versehen ist.

3. Vorrichtung nach Anspruch 2, dadurch gekennzeichnet, daß die Verschlußvorrichtung (26) hohl ausgebildet ist und ein in Strömungsrichtung vorderes Ende aufweist, das eine in den Hals am Ausgang (2) der Verbrennungskammer (3) hineinstehende Düsennadel (27) bildet, die ferner einen Körper (26, 27) aufweist, der die zweite Kammer (28) begrenzt, die so eingerichtet ist, daß sie mit der Verbrennungskammer (3) in Verbindung steht, und die ein Streurohr (32) aufweist.

4. Vorrichtung nach Anspruch 2, dadurch gekennzeichnet, daß die thermische Abschirmung (22) den Körper der Verschlußvorrichtung (26) teilweise umgreift.

5. Vorrichtung nach Anspruch 4, dadurch gekennzeichnet, daß am Körper der Verschlußeinrichtung (26) umfangsseitig ein radial nach außen vorstehender Flansch (30) vorgesehen ist, der in Antriebsverbindung mit der thermischen Abschirmung steht.

6. Vorrichtung nach Anspruch 5, dadurch gekennzeichnet, daß die bewegliche Einheit so ausgebildet ist, daß sie zusammen mit dem Zylinderkörper (13) an ihrem in Strömungsrichtung vorderen Ende eine erste ringförmige Kammer (35) für die Verbrennungsgase und ihrem in Strömungsrichtung hinteren Ende mit dem Körper (13) eine zweite ringförmige Zylinderkammer (33) für eine hydraulische Flüssigkeit bildet.

7. Vorrichtung nach Anspruch 6, dadurch gekennzeichnet, daß die erste ringförmige Kammer (35) mit dem Ausgang der Verbrennungskammer (3) über einen ringförmigen Durchlaß (36) in Verbindung steht, der zwischen dem Körper der Verschlußeinrichtung (26) und einem thermischen Schutzeinsatz (6) eines Fortsatzes (7) der Verbrennungskammer ausgespart ist, der die Verschlußeinrichtung teilweise umschließt.

8. Vorrichtung nach Anspruch 6, dadurch gekennzeichnet, daß die zweite ringförmige Kammer (33) mit der Außenseite durch die Mittel (34) zur Bremsung der Verstellbewegung der beweglichen Einheit in Verbindung steht, die den Auslaß von Flüssigkeit aus dem Zylinder begrenzt.

9. Vorrichtung nach den Ansprüchen 6 und 8, dadurch gekennzeichnet, daß die zweite ringförmige Kammer (33) mit einer Regelungsvorrichtung in Verbindung steht, die auf diese Weise die Regelung der Schubkraft auf den gewünschten Wert erlaubt.

10. Vorrichtung nach Anspruch 3, dadurch gekennzeichnet, daß das Streurohr (32) von einem auf dem Körper (1) der Verschlußvorrichtung (26) an dem in Strömungsrichtung hinteren Ende der zweiten Kammer (28) angeordneten Teil gebildet ist.